(19) Europäisches Patentamt

European Patent Office

Office européen des brevets

(11) **EP 0 465 286 B1**

(12) **FASCICULE DE BREVET EUROPEEN**

(45) Date de publication et mention
de la délivrance du brevet:
**27.03.1996 Bulletin 1996/13**

(51) Int. Cl.$^6$: **C08F 251/00**, C02F 5/10

(21) Numéro de dépôt: **91401603.5**

(22) Date de dépôt: **17.06.1991**

(54) **Polysaccharides greffés, leur procédé de préparation et leur application comme agents de séquestration**

Gepfropfte Polysacchariden, Verfahren zu ihrer Herstellung und ihre Verwendung als Sequestriermittel

Grafted polysaccharides, process for their preparation and their application as sequestering agents

(84) Etats contractants désignés:
**AT BE CH DE DK ES FR GB GR IT LI LU NL SE**

(30) Priorité: **02.07.1990 FR 9008320**

(43) Date de publication de la demande:
**08.01.1992 Bulletin 1992/02**

(73) Titulaire: **RHONE-POULENC CHIMIE
F-92408 Courbevoie Cédex (FR)**

(72) Inventeurs:
• **Vidil, Christine
F-69007 Lyon (FR)**

• **Vaslin, Sophie,
Parc des Bords de Marne
F-94360 Bry sur Marne (FR)**

(74) Mandataire: **Fabre, Madeleine-France et al
RHONE-POULENC CHIMIE,
Direction de la Propriété Industrielle,
25 Quai Paul Doumer
F-92408 Courbevoie Cédex (FR)**

(56) Documents cités:
**FR-A- 2 277 837        US-A- 3 989 656**

# Description

La présente invention a pour objet des polysaccharides greffés, leur procédé de préparation et leur application comme agents séquestrants de cations, notamment des ions alcalino-terreux.

Les polysaccharides greffés faisant l'objet de l'invention sont caractérisés en ce qu'ils comprennent

- un polymère tronc constitué par un polydextrose de masse moléculaire moyenne en poids inférieure à 10 000 et de préférence de l'ordre de 100 à 5 000,
- et de 20 à 70 %, de préférence de 25 à 35 % en poids dudit polymère tronc de greffons dérivés d'au moins un monomère éthylèniquement insaturé hydrosoluble.

Le polydextrose est un polymère statistique de glucose contenant de petites quantités de sorbitol et d'acide citrique, obtenu par polycondensation de ces trois matières premières, il est utilisé dans le domaine alimentaire comme complément des édulcorants de synthèse. Il fait l'objet des brevets américains US N° 3.766.165 et 4.622.233.

Parmi les monomères éthylèniquement insaturés hydrosolubles susceptibles de former les motifs répétitifs des greffons on peut citer ceux contenant au moins un groupe hydrophile tels que :

- les monoacides carboxyliques éthyléniquement insaturés : acide acrylique, acide méthacrylique et leurs sels alcalins ou d'ammonium,
- les diacides carboxyliques éthyléniquement insaturés : acide maléïque, acide itaconique, acide fumarique, acide crotonique...et leurs sels alcalins ou d'ammonium,
- les hydroxyacides carboxyliques éthyléniquement insaturés : acide hydroxyacrylique .... et leurs sels alcalins ou d'ammonium,
- les acides sulfonés éthylèniquement insaturés : acide vinylsulfonique, acide allylsulfonique...et leurs sels alcalins ou d'ammonium,
- les alcools éthylèniquement insaturés : alcool allylique, alcool méthallylique...

D'une manière préférentielle lesdits greffons peuvent être constitués par:

- un homopolymère d'acide acrylique ou méthacrylique,
- un copolymère d'acide acrylique ou méthacrylique et d'acide maléïque ou itaconique selon un rapport molaire monoacide/diacide de l'ordre de 50-95/50-5, de préférence de l'ordre de 55-90/45-10,
- un sel alcalin (de sodium notamment) ou d'ammonium dudit homopolymère ou dudit copolymère.

D' une manière avantageuse, les dits greffons contiennent en moyenne de l'ordre de 2 à 50, de préférence en moyenne de l'ordre de 10 à 20 motifs monomères par greffon.

Les produits faisant l'objet de l'invention peuvent être obtenus par tout procédé connu de greffage des polysaccharides par les monomères éthylèniquement insaturés. Ledit greffage peut être réalisé par irradiation, par polymérisation radicalaire en solution aqueuse à l'aide d'amorceurs du type eau oxygénée, persulfate tel que persulfate de sodium, potassium ou ammonium ou d'un sel de cérium IV.

Un mode tout particulièrement performant de greffage est celui mettant en oeuvre un sel de Ce IV hydrosoluble ou hydrodispersable.

L'opération se déroule en milieu aqueux, et de préférence dans une solution aqueuse d'acide nitrique ou sulfurique présentant une concentration en acide de l'ordre de 0,005 à 0,1 mole/litre. Le pH du milieu réactionnel est de l'ordre de 1 à 2.

Le sel de Ce IV peut être de préférence choisi parmi le nitrate cérique, le sulfate cérique, $Ce(SO_4)_4(NH_4)_4$, $Ce(NO_3)_6(NH_4)_2$.

Le mécanisme de greffage des polysaccharides par les monomères insaturés en présence de sels de cérium IV a été décrit par Munmaya K. Mishra dans "Rev. Macromol. Chem. Phys., C22(3), 471-513 (1982-1983) ainsi que par Samal et al. dans "Rev. Macromol. Chem. Phys., C26(1), 81-141 (1986)".

Le sel de Ce IV est mis en oeuvre selon une quantité pouvant aller de 10 à 300 mmoles de $Ce^{4+}$, de préférence de l'ordre de 40 mmoles à 250 mmoles de $Ce^{4+}$, pour 100g de tronc de polydextrose.

La nature du polydextrose pouvant subir l'opération de greffage a déjà été mentionnée ci-dessus.

Il en est de même des monomères éthylèniquement insaturés hydrosolubles. Les quantités de monomère(s) pouvant être mises en oeuvre sont de l'ordre de 20 à 70 % en poids, de préférence de l'ordre de 25 à 35 % en poids par rapport au poids de polydextrose.

La concentration totale en polydextrose et en monomère(s) éthylèniquement insaturé(s) dans le milieu aqueux de polymérisation est telle que ce dernier présente un taux d'extrait sec en poids de l'ordre de 5 à 40 % de préférence de l'ordre de 15 à 20 % de son poids total.

L'opération de greffage par polymérisation peut être réalisée à une température de l'ordre de 20 à 60 °C et généralement de l'ordre de 35 à 45 °C. Elle dure généralement de l'ordre de 2 à 4 heures.

Elle peut être réalisée en discontinu ou en continu avec introduction en continu du ou des monomères éthylèniquement insaturés dans un pied de cuve contenant le milieu aqueux, le polydextrose et l'amorceur. Lorsqu'il s'agit d'un mélange de monomères, par exemple d'acide acrylique et d'acide maléïque, il peut être intéressant d'introduire en semi-continu une partie de l'acide acrylique et l'acide maléïque dans un pied de cuve contenant le milieu aqueux, le polydextrose et l'amorceur, puis en semi-continu le reste de l'acide acrylique.

Le produit obtenu en fin de polymérisation se présente après refroidissement sous forme d'une solution faiblement visqueuse.

Celui-ci présente de multiples propriétés, notamment :

- de séquestration des cations, notamment du calcium et du magnésium
- d'inhibition de croissance cristalline, notamment du carbonate de calcium
- de dispersion de charges du type carbonate de calcium lorsque les greffons dérivés du ou des monomère(s) éthylèniquement insaturé(s) hydrosoluble(s) sont courts
- de floculation lorsque lesdits greffons sont longs.

Il présente en outre l'avantage considérable d'être au moins partiellement biodégradable.

Les polysaccharides greffés faisant l'objet de l'invention peuvent être utilisés dans le traitement des chaudières, comme dispersants de charges pour la fabrication du papier, de peintures, de ciment, de compositions phytosanitaires, de céramiques ...., comme agents de floculation pour le traitement des eaux.....

Les exemples suivants sont donnés à titre indicatif et ne peuvent être considérés comme une limite de domaine et de l'esprit de l'invention.

EXEMPLE 1

L'essai est réalisé en batch dans un erlenmeyer de 100 ml placé dans un banc d'agitation KOTTERMAN® (commercialisé par Labo Service), en mettant en oeuvre :

- 5 g de poudre de polydextrose partiellement neutralisé de type K commercialisé par Pfizer (une solution aqueuse à 10 % a un pH 5-6) ; sa distribution moléculaire en poids est telle que près de 90 % du produit présente une masse moléculaire en poids inférieure à 5 000.
- 2,5 g d'acide acrylique
- 40 mmoles de $Ce^{4+}$ pour 100 g de polydextrose, sous forme d'ammonium $Ce^{IV}$ sulfate
- 0,035 mole par litre d'acide nitrique
- de l'eau jusqu'à obtenir un extrait sec de 27 % en poids.

Les différents ingrédients sont mélangés ; la solution est portée à 40° C pendant deux heures, puis on la laisse refroidir.

La capacité de séquestration des ions calcium du produit obtenu est mesurée à l'aide d'une électrode présentant une membrane sélective perméable aux ions calcium. On trace d'abord une courbe d'étalonnage en mettant en oeuvre 100 ml d'une solution de chlorure de sodium à 3 g/l de pH 10,5 dans laquelle on ajoute des quantités d'ions calcium variant de $10^{-5}$ à $3 \times 10^{-3}$ mole/l et on trace la courbe potentiel délivré par l'électrode en fonction de la concentration en ions $Ca^{2+}$ libres.

Ensuite on pèse 0,1 g de polymère (sec) auquel on ajoute de l'eau jusqu'à obtenir 100 g de solution et 0,3 g de chlorure de sodium en poudre ; le pH est ajusté à environ 10,5 par de la soude en solution aqueuse.

On trace la droite $[Ca^{2+}]$ libre/ $[Ca^{2+}]$ fixé = f ($[Ca^{2+}]$ libre)

A partir de cette droite on détermine :

- la constante de complexation K des ions calcium du polymère
- le nombre So de sites de complexation du polymère définis par :

$$\frac{[Ca^{2+}] \text{ libre}}{[Ca^{2+}] \text{ fixé}} = \frac{1}{KSo} + \frac{1}{So} [Ca2+] \text{ libre}$$

On constate que le produit obtenu présente :
- un nombre de sites de complexation So = $2 \times 10^{-3}$ sites/g de polydextrose greffé.
- une constante de complexation log K = 3,6

EXEMPLE 2

On répète l'opération décrite à l'exemple précédent à partir de :

- 5 g de polydextrose de type K
- 10 g d'acide acrylique
- 40 mmoles de $Ce^{4+}$ pour 100 g de polydextrose, sous forme d'ammonium $Ce^{IV}$ sulfate
- 0,035 mole par litre d'acide nitrique
- de l'eau jusqu'à obtenir un extrait sec de 21 % en poids.
  Le produit obtenu présente :
- un nombre de sites de complexation So = $3,1 \times 10^{-3}$ sites/g
- une constante de complexation log K = 4,1

La propriété d'inhibition de cristallisation du carbonate de calcium de ce produit est mise en évidence en utilisant la méthode décrite par Z. Amjad dans Langmuir 1987, 3, 224-228.

La mesure est réalisée dans une cellule fermée thermostatée à l'aide d'une solution sursaturée à $10^{-3}$ mole/l de bicarbonate de sodium et à $2 \times 10^{-3}$ mole/l de chlorure de calcium (pH =8,6), à laquelle on ajoute 5 g/l de carbonate de calcium de synthèse (surface spécifique = 80 m²/g ; diamètre théorique = 20 nm) ; on mesure la diminution de la vitesse de cristallisation du carbonate de calcium obtenue par addition de 500 ppm (exprimé en sec) du polydextrose greffé préparé ci-dessus.

On constate que le rapport :
constante de desorption $k_d$/constante d'adsorption $k_a$ = 0,06

EXEMPLE 3

L'essai est réalisé en semi continu à 40° C dans un réacteur de 250 ml. On forme un pied de cuve à l'aide de :

- 15 g de polydextrose de type K

- 0,065 mole par litre d'acide nitrique
- 0,83 g d'ammonium Ce$^{IV}$ nitrate
- 97 g d'eau

On introduit en semi-continu pendant 1 heure

- 7,5 g d'acide acrylique
- 7,5 g d'eau

Le taux d'extrait sec du milieu est de 16 % en poids. On maintient le milieu encore 1 heure à 40° C.
Le produit obtenu présente :

- un nombre de sites de complexation So = 2 x 10$^{-3}$ sites/g
- une constante de complexation log K = 4,1

## EXEMPLE 4

On réalise l'essai décrit à l'exemple 3 à l'aide d'un pied de cuve contenant :

- 15 g de polydextrose de type K
- 0,06 mole par litre d'acide nitrique
- 17,75 g d'ammonium Ce$^{IV}$ nitrate
- 97 g d'eau
  et en introduisant en semi-continu
- 7,5 g d'acide acrylique
- 7,5 g d'eau

Le taux d'extrait sec du milieu est de 22 % en poids. Le produit obtenu présente :

- un nombre de sites de complexation So = 1,1 x 10$^{-3}$ sites/g
- une constante de complexation log K = 4,2

## EXEMPLE 5

On réalise l'opération décrite à l'exemple 1 à l'aide de:

- 5 g de polydextrose de type K
- 2,5 g d'acide acrylique
- 80 mmoles de Ce$^{4+}$ pour 100 g de polydextrose sous forme d'ammonium Ce$^{IV}$ sulfate
- 0,035 mole/l d'acide nitrique
- de l'eau jusqu'à obtention un extrait sec de 20 % en poids.

Le produit obtenu présente :

- un nombre de sites de complexation So = 1,4 x 10$^{-3}$ sites/g
- une constante de complexation log K = 3,9

Sa propriété d'inhibition de cristallisation du carbonate de calcium correspondant à un rapport :

constante de desorption $k_d$/constante d'adsorption $k_a$ = 0,11

## EXEMPLE 6

On réalise l'opération décrite à l'exemple 1 à l'aide de :

- 5 g de polydextrose de type K
- 2,5 g d'acide acrylique
- 10 mmoles de Ce$^{4+}$ pour 100 g de polydextrose sous forme d'ammonium Ce$^{IV}$ nitrate
- 0,06 mole/l d'acide nitrique
- de l'eau jusqu'à obtention un extrait sec de 20 % en poids.

Le produit obtenu présente :

- un nombre de sites de complexation So = 1,5 x 10$^{-3}$ sites/g
- une constante de complexation log K = 4,1

La biodégradabilité "ultime" de ce produit est mesurée selon la norme AFNOR T90-312 (en conformité avec la norme internationale ISO 7827). Le test est réalisé à partir :

- d'un inoculum obtenu par filtration d'eau d'entrée de la station d'épuration urbaine de Saint Germain au Mont d'Or (Rhône).
- d'un milieu d'essai contenant 4 x 10$^7$ bactéries/ml
- d'une quantité de produit à tester telle que le milieu d'essai contienne une concentration en carbone organique de l'ordre de 40 mg/l. Le taux de biodégradabilité du produit testé en fonction du temps est le suivant :

| TEMPS (jours) | BIODEGRABILITE (%) |
|:---:|:---:|
| 0 | 0 |
| 2 | 13 |
| 5 | 31 |
| 9 | 31 |
| 13 | 33 |
| 22 | 47 |
| 28 | 44 |

## EXEMPLE 7

On répète l'opération décrite à l'exemple 1 à partir de :

- 5 g de polydextrose de type K

- 2,5 g d'acide acrylique
- 100 mmoles de $Ce^{4+}$ pour 100 g de polydextrose sous forme d'ammonium $Ce^{IV}$ sulfate
- 0,03 mole/l d'acide nitrique
- de l'eau jusqu'à obtention un extrait sec de 20 %.

Le produit obtenu présente :

- un nombre de sites de complexation So = $2 \times 10^{-3}$ sites/g
- une constante de complexation log K = 3,5
- un taux de biodégradabilité en fonction du temps de

| TEMPS (jours) | BIODEGRADABILITE % |
|---|---|
| 0 | 0 |
| 7 | 46 |
| 14 | 53 |
| 21 | 53 |

- un rapport constante de désorption $K_d$/ constante d'adsorption $k_a$ = 0,11.

**Revendications**

1. Polysaccharides greffés caractérisés en ce qu'ils comprennent

  - un polymère tronc constitué par un polydextrose de masse moléculaire en poids inférieure à 10 000.
  - et de 20 à 70% en poids dudit polymère tronc de greffons dérivés d'au moins un monomère éthylèniquement insaturé hydrosoluble choisi parmi un:

    . monoacide carboxylique éthyléniquement insaturé
    . diacide carboxylique éthyleniquement insaturé
    . hydroxyacide carboxylique éthyléniquement insaturé
    . acide sulfoné éthyléniquement insaturé
    . sel alcalin ou d'ammonium de ces acides
    . un alcool éthyléniquement insaturé

2. Polysaccharides greffés selon la revendication 1)caractérisés en ce qu'ils comprennent

  - un polymère tronc constitué par un polydextrose de masse moléculaire moyenne en poids de l'ordre de 100 à 5 000.
  - et de 25 à 35% en poids dudit polymère tronc de greffons d'au moins un monomère éthylèniquement insaturé hydrosoluble.

3. Polysaccharides greffés selon la revendication 1 ou 2, caractérisés en ce que ledit monomère éthyléniquement insaturé hydrosoluble est

  . l'acide acrylique
  . l'acide méthacrylique
  . un mélange acide acrylique ou méthacrylique / acide maleique ou itaconique selon un rapport molaire monoacide/ diacide de l'ordre de 50 - 95 / 50 - 5
  . Un sel alcalin ou d'ammonium de ces acides

4. Polysaccharides greffés selon la revendication 3, 3 à caractérisés en ce que l'opération de greffage est réalisée en milieux aqueux à un pH de l'ordre de 1 à 2 en présence d'acide nitrique ou sulfurique et d'un sel de cérium IV hydrosoluble ou hydrodispersable selon une quantité pouvant aller de 10 à 300 mmoles de $Ce^{4+}$ pour 100 g de polydextrose à une température de 20 à 60° C.

5. Procédé de préparation des polysaccharides greffés faisant l'objet de l'une quelconque des revendications 1 à 4, caractérisé en ce qu'on greffe un polydextrose de masse moléculaire moyenne en poids inférieure à 10 000 par 20 à 70 % du poids dudit polydextrose d'au moins un monomère éthyléniquement insaturé hydrosoluble.

6. Procédé de préparation des polysaccharides greffés faisant l'objet de la revendication 2, caractérisé en ce qu'on greffe un polydextrose de masse moléculaire moyenne en poids de l'ordre de 100 à 5 000 par 25 à 35 % du poids dudit polydextrose d'au moins un monomère éthyléniquement hydrosoluble.

7. Procédé selon l'une des revendications 5 à 6, caractérisé en ce que l'opération de greffage est réalisée en milieux aqueux à un pH de l'ordre de 1 à 2 en présence d'acide nitrique ou sulfurique et d'un sel de cérium IV hydrosoluble ou hydrodispersable selon une quantité pouvant aller de 10 à 300 mmoles de $Ce^{4+}$ pour 100 g de polydextrose à une température de 20 à 60° C.

8. Utilisation des polysaccharides greffés faisant l'objet de l'une quelconque des revendications 1 à 4 comme agents séquestrants de cations,notamment des ions alcalino-terreux.

**Claims**

1. Graft polysaccharides characterised in that they comprise

  - a polymer backbone consisting of a polydextrose having a weight-average molecular mass of less than 10,000,

- and from 20 to 70 % by weight of the said polymer backbone of grafts derived from at least one water-soluble ethylenically unsaturated monomer chosen from an:

  . ethylenically unsaturated carboxylic monoacid
  . ethylenically unsaturated carboxylic diacid
  . ethylenically unsaturated carboxylic hydroxyacid
  . ethylenically unsaturated sulphonic acid
  . alkali metal or ammonium salt of these acids
  . ethylenically unsaturated alcohol.

2. Graft polysaccharides according to Claim 1, characterised in that they comprise

   - a polymer backbone consisting of a polydextrose having a weight-average molecular mass of the order of 100 to 5,000,
   - and from 25 to 35 % by weight of the said polymer backbone of grafts of at least one water-soluble ethylenically unsaturated monomer.

3. Graft polysaccharides according to Claim 1 or 2, characterised in that the said water-soluble ethylenically unsaturated monomer is

   . acrylic acid
   . methacrylic acid
   . a mixture of acrylic or methacrylic acid/maleic or itaconic acid in a monoacid/diacid molar ratio of the order of 50-95/50-5
   . an alkali metal or ammonium salt of these acids.

4. Graft polysaccharides according to Claim 3, characterised in that the grafting operation is carried out in aqueous media at a pH of the order of 1 to 2 in the presence of nitric or sulphuric acid and of a water-soluble or water-dispersible cerium(IV) salt in an amount which may range from 10 to 300 mmol of $Ce^{4+}$ per 100 g of polydextrose, at a temperature of 20 to 60°C.

5. Process for the preparation of the graft polysaccharides which are the subject of any one of Claims 1 to 4, characterised in that a polydextrose having a weight-average molecular mass of less than 10,000 is grafted with 20 to 70 % of the weight of the said polydextrose of at least one water-soluble ethylenically unsaturated monomer.

6. Process for the preparation of the graft polysaccharides which are the subject of Claim 2, characterised in that a polydextrose having a weight-average molecular mass of the order of 100 to 5000 is grafted with 25 to 35 % of the weight of the said polydextrose of at least one water-soluble ethylenically unsaturated monomer.

7. Process according to one of Claims 5 to 6, characterised in that the grafting operation is carried out in agueous media at a pH of the order of 1 to 2 in the presence of nitric or sulphuric acid and of a water-soluble or water-dispersible cerium(IV) salt in an amount which may range from 10 to 300 mmol of $Ce^{4+}$ per 100 g of polydextrose, at a temperature of 20 to 60°C.

8. Use of the graft polysaccharides which are the subject of any one of Claims 1 to 4 as sequestering agents for cations, in particular alkaline-earth metal ions.

**Patentansprüche**

1. Gepfropfte Polysaccharide, dadurch gekennzeichnet, daß sie umfassen

   - einen Polymerstamm, bestehend aus einer Polydextrose der mittleren Molekularmasse (in Gewicht) von unter 10 000, und
   - 20 bis 70 Gew.-% des genannten Polymerstammes gepfropfte Seitenketten, abgeleitet von mindestens einem wasserlöslichen, ethylenisch ungesättigten Monomer, ausgewählt unter

     . ethylenisch ungesättigter Monocarbonsäure,
     . ethylenisch ungesättigter Dicarbonsäure,
     . ethylenisch ungesättigter Hydroxycarbonsäure,
     . ethylenisch ungesättigter Sulfonsäure,
     . den Alkali- oder Ammoniumsalzen dieser Säuren,
     . einem ethylenisch ungesättigten Alkohol.

2. Gepfropfte Polysaccharide nach Anspruch 1, dadurch gekennzeichnet, daß sie umfassen

   - einen Polymerstamm, bestehend aus einer Polydextrose der mittleren Molekularmasse (in Gewicht) in der Größenordnung von 100 bis 5 000, und
   - 25 bis 35 Gew.-% des genannten Polymerstammes gepfropfte Seitenketten, abgeleitet von mindestens einem wasserlöslichen, ethylenisch ungesättigten Monomer.

3. Gepfropfte Polysaccharide nach Anspruch 1 oder 2, dadurch gekennzeichnet, daß das genannte wasserlösliche, ethylenisch ungesättigte Monomer

   . Acrylsäure,
   . Methacrylsäure,

.   eine Mischung Acrylsäure oder Methacrylsäure/Maleinsäure oder Itaconsäure mit einem molaren Verhältnis Monosäure/Disäure in der Größenordnung von 50 - 95/50 - 5,

.   ein Alkali- oder Ammoniumsalz dieser Säuren ist.

4.  Gepfropfte Polysaccharide nach Anspruch 3, dadurch gekennzeichnet, daß der Arbeitsgang des Pfropfens im wäßrigen Medium bei einem pH-Wert in der Größenordnung von 1 bis 2 in Anwesenheit von Salpetersäure oder Schwefelsäure und einem wasserlöslichen oder wasserdispergierbaren Cer(IV)-Salz, in einer Menge von 10 bis 300 mMol Ce$^{4+}$ pro 100 g Polydextrose, bei einer Temperatur von 20 bis 60 °C realisiert wird

5.  Verfahren zur Herstellung von gepfropften Polysacchariden, die den Gegenstand von irgendeinem der Ansprüche 1 bis 4 bilden, dadurch gekennzeichnet, daß man eine Polydextrose der mittleren Molekularmasse (in Gewicht) von unter 10 000 mit 20 bis 70 Gew.-% der genannten Polydextrose von minde-stens einem wasserlöslichen, ethylenisch ungesät-tigten Monomer pfropft.

6.  Verfahren zur Herstellung von gepfropften Polysacchariden, die den Gegenstand von Anspruch 2 bilden, dadurch gekennzeichnet, daß man eine Polydextrose der mittleren Molekularmasse (in Gewicht) in der Größenordnung von 100 bis 5 000 mit 25 bis 35 Gew.-% der genannten Polydextrose von mindestens einem wasserlöslichen, ethylenisch ungesättigten Monomer pfropft.

7.  Verfahren nach einem der Ansprüche 5 bis 6, dadurch gekennzeichnet, daß der Arbeitsgang des Pfropfens im wäßrigen Medium bei einem pH-Wert in der Größenordnung von 1 bis 2 in Anwesenheit von Salpetersäure oder Schwefelsäure und einem wasserlöslichen oder wasserdispergierbaren Cer(IV)-Salz, in einer Menge von 10 bis 300 mMol Ce$^{4+}$ pro 100 g Polydextrose, bei einer Temperatur von 20 bis 60 °C realisiert wird

8.  Verwendung der gepfropften Polysaccharide, die den Gegenstand von irgendeinem der Ansprüche 1 bis 4 bilden, als Sequestriermittel für Kationen, ins-besondere für Erdalkali-Ionen.